# EUROPÄISCHE PATENTSCHRIFT

(11) **EP 1 283 952 B1**
(45) Veröffentlichungstag und Bekanntmachung des Hinweises auf die Patenterteilung: **03.05.2006**
(21) Anmeldenummer: 01943098.2
(22) Anmeldetag: 16.05.2001
(51) Int. Cl.: F02D 41/40

(54) **VERFAHREN ZUR ZYLINDERGLEICHSTELLUNG BEI EINER BRENNKRAFTMASCHINE**
METHOD FOR CO-ORDINATING CYLINDERS OF AN INTERNAL COMBUSTION ENGINE
PROCEDE DE MISE A NIVEAU DE CYLINDRES D'UN MOTEUR A COMBUSTION INTERNE

(30) Priorität: 26.05.2000 DE 10026274
(43) Veröffentlichungstag der Anmeldung: 19.02.2003
(73) Patentinhaber: SIEMENS AKTIENGESELLSCHAFT, 80333 München (DE)
(72) Erfinder: JUNG, Uwe, 93173 Wenzenbach (DE); WENZLAWSKI, Klaus, 90429 Nürnberg (DE)
(86) Internationale Anmeldenummer: PCT/DE2001/001866
(87) Internationale Veröffentlichungsnummer: WO 2001/090556

(56) Entgegenhaltungen:
- EP-A- 0 894 965
- EP-A- 0 937 882
- EP-A- 0 971 115
- EP-A- 0 980 973
- DE-A- 19 700 711
- US-A- 4 653 447

## Beschreibung

Die Erfindung betrifft ein Verfahren gemäß dem Oberbegriff des Patentanspruchs 1.

Bei einer mehrzylindrigen Brennkraftmaschine ergibt sich bei der Einspritzung von Kraftstoff in die Verbrennungsräume durch Streuungen der Eigenschaften der Einspritzvorrichtungen ein systematischer Fehler. Aufgrund von Fertigungstoleranzen und unterschiedlicher Abnutzung während der Lebensdauer werden bei gleicher Einspritzzeit und ansonsten identischen Randbedingungen unterschiedliche Kraftstoffmengen den einzelnen Zylindern zugeführt. Die unterschiedlichen Kraftstoffmengen führen zu einer unterschiedlichen Leistungsabgabe der einzelnen Zylinder, was neben einer Steigerung der Laufunruhe auch zu einer Erhöhung der Menge an schädlichen Abgaskomponenten führt.

Aus DE 197 00 711 C2 und US 4,653,447 A ist ein Verfahren bzw. Vorrichtung zum Ausgleich des systematischen Fehlers an Einspritzvorrichtungen einer Brennkraftmaschine bekannt. Das bekannte Verfahren bzw. die bekannte Vorrichtung paßt zum Ausgleich des systematischen Fehlers die Einspritzzeit und/oder den Einspritzbeginnwinkel in entsprechender Weise an.

Die Druckschriften EP 0 971 115 A2 und EP 0 894 965 A1 offenbaren ein Verfahren zur Zylindergleichstellung bezüglich der Kraftstoffeinspritzmenge für eine mehrere Zylinder aufweisende Brennkraftmaschine, bei der ein Steuerparameter zum Steuern der Einspritzung korrigiert wird, um einen systematischen Fehler an einer Einspritzvorrichtung auszuschließen, wobei als Steuerparameter eine Öffnung- und/ oder Schließflanke der Einspritznadel verwendet wird, den durch die Steuerung und/oder Regelung des Einzugsimpulses bzgl. seiner Breite unter Spannung bzw. des Einzugsstroms erreicht wird.

Die Aufgabe der Erfindung besteht darin, ein weiteres Verfahren zur Zylindergleichstellung bereitzustellen.

Die Aufgabe der Erfindung wird durch die Merkmale des Anspruchs 1 gelöst.

In vorteilhafter Weise werden die Nadelöffnungs- und/oder Nadelschließflanken der Einspritzvorichtungen in der Weise verändert, daß ein systematischer Fehler der Einspritzvorrichtung ausgeglichen wird.

Weitere vorteilhafte Ausbildungen der Erfindung sind in den abhängigen Ansprüchen angegeben.

Die Erfindung wird anhand der Figuren näher erläutert; es zeigen:
- Figur 1: ein Diagramm mit korrigierten Nadelöffnungs- und Nadelschließflanken,
- Figur 2: ein Diagramm mit einer symmetrischen Korrektur der Nadelöffnungs- und Nadelschließflanken,
- Figur 3: Kennlinien für die Einspritzmenge zweier Einspritzvorrichtungen, und
- Figur 4: einen schematischen Aufbau einer Einspritzvorrichtung.

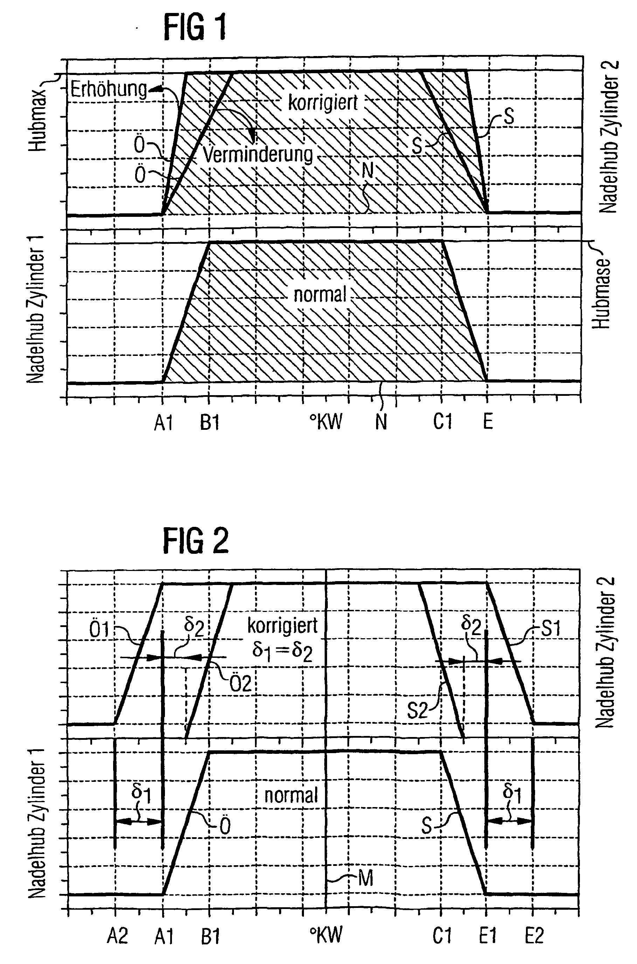

Figur 1 zeigt ein Diagramm, das im oberen Teil eine Nadelöffnungslinie für den Nadelhub einer ersten Einspritzvorrichtung eines ersten Zylinders und im unteren Teil eine Nadelöffnungslinie für den Nadelhub einer zweiten Einspritzvorrichtung eines zweiten Zylinders zeigt. Die zweite Einspritzvorrichtung stellt eine Normeinspritzvorrichtung dar, deren Einspritzmenge der vorgegebenen optimalen Einspritzmenge entspricht.

Beim ersten Kurbelwellenwinkel A1 beginnt die Einspritzung und die Nadeln der ersten und der zweiten Einspritzvorrichtung beginnen sich vom Dichtsitz abzuheben, um bei einem maximalen Nadelhub Hubmax bei einem zweiten Kurbelwellenwinkel B1 stehen zu bleiben. Der maximale Nadelhub Hubmax wird bis zu einem vorgegebenen dritten Kurbelwellenwinkel C1 beibehalten. Beim Schließen der Einspritzvorrichtung bewegt sich die Nadel wieder auf ihren Dichtsitz, so daß zum vierten Kurbelwellenwinkel E die Einspritzöffnung geschlossen ist.

Im unteren Teil des Diagramms ist eine Nadelbewegung der zweiten Einspritzvorrichtung entsprechend dargestellt. Weicht nun aufgrund von Fertigungstoleranzen oder aufgrund von Alterungserscheinungen die erste Einspritzvorrichtung in der abgegebenen Kraftstoffmenge von der abzugebenden Normkraftstoffmenge ab, so wird zur Korrektur die Nadel der ersten Einspritzvorrichtung schneller oder langsamer vom Dichtsitz bis zum maximalen Nadelhub bewegt. Auf diese Weise wird die Öffnungsflanke Ö steiler oder flacher ausgebildet. Ebenso wird vorzugsweise die Schließflanke S steiler oder flacher ausgebildet. Die von der Einspritzvorrichtung während eines Einspritzvorganges abgegebene Kraftstoffmenge ist proportional zu der Fläche, die von der Nadelöffnungslinie in Bezug auf die Nullinie N umgrenzt wird. Diese Fläche ist in Figur 1 durch eine Schraffierung hervorgehoben.

Bei einer steileren oder flacheren Öffnungs- und/oder Schließflanke der Nadel wird eine größere bzw. kleinere Kraftstoffmenge während der Einspritzung eingespritzt. Auf diese Weise kann durch eine Änderung der Steigung der Öffnungsflanke und/oder der Schließflanke die eingespritzte Kraftstoffmenge variiert werden. Durch eine entsprechende Auslegung der Endstufe der Einspritzvorrichtung und/oder der Steuerung und Regelung der Einspritzvorrichtung wird dieses Verhalten zur Zylindergleichstellung genutzt.

Vorzugsweise wird das beschriebene Verfahren bei einem piezoelektrischen Einspritzventil durch eine entsprechende Variation der Aktuatorbestromung eingesetzt.

Figur 2 zeigt ein Diagramm, das im unteren Teil den Nadelhub der Einspritznadel für eine Normeinspritzvorrichtung zeigt, die ein optimales Einspritzverhalten zeigt. Beim ersten Kurbelwellenwinkel A1 beginnt die Einspritznadel vom Dichtsitz abzuheben, um bei einen zweiten Kurbelwellenwinkel B1 den maximalen Nadelhub zu erreichen. Am Ende der Einspritzung beginnt die Einspritznadel beim dritten Kurbelwellenwinkel C1 sich vom maximalen Nadelhub in Richtung auf den Dichtsitz zu bewegen. Die Nadel erreicht beim vierten Kurbelwellenwinkel E1 den Dichtsitz, so daß die Einspritzung beendet ist.

Im oberen Bereich ist eine Korrektur der Einspritzung dargestellt, bei der ein erster Nadelhubverlauf mit Öffnungs- und Schließflanke Ö1 dargestellt ist. Die Öffnungsflanke Ö1 ist um einen vorgebbaren Differenzwinkel δ1 gegenüber der Öffnungsflanke Ö der normalen Einspritzung, die im unteren Teilbild dargestellt ist, zu einem früheren Kurbelwellenwinkel A2 verschoben ist. Damit erreicht die Einspritznadel zum ersten Kurbelwellenwinkel A1 den maximalen Nadelhub. Die Schließflanke S1 am Ende der Einspritzung ist ebenfalls um den ersten Kurbelwellenwinkel δ1 zu einem siebten Kurbelwellenwinkel E2 verschoben.

Die Nadel beginnt beim fünften Kurbelwellenwinkel E1 sich vom maximalen Nadelhub in Richtung auf den Dichtsitz zu bewegen. Beim sechsten Kurbelwellenwinkel E2 erreicht die Nadel den Dichtsitz und beendet damit die Einspritzung. Durch die bevorzugte Verschiebung der Öffnungsflanke und/oder Schließflanke Ö1, S1 zu früheren bzw. späteren Kurbelwellenwinkeln wird die Einspritzung symmetrisch um eine Mittellage M der Einspritzung erweitert. Damit wird mehr Kraftstoffmenge im Vergleich zur normalen Ansteuerung eingespritzt und somit die eingespritzte Kraftstoffmenge verschiedener Einspritzvorrichtungen aufeinander angepaßt, so daß bei gleichen Randbedingungen die verscheidenen Einspritzvorrichtungen nahezu die gleiche Kraftstoffmenge einspritzen.

In Figur 2 ist im oberen Bereich ein zweiter Nadelhubverlauf mit den Öffnungs- und Schließflanken Ö2, S2 dargestellt, bei der die Öffnungsflanke und die Schließflanke beim Beginn bzw. beim Ende der Einspritzung um einen vorgegebenen, weiteren Differenzkurbelwellenwinkel δ2 in Richtung auf die Mittellage M der vorgegebenen Normaleinspritzung verschoben sind. Auf diese Weise wird weniger Kraftstoff als bei der Ansteuerung entsprechend dem unteren Teil des Diagramms über die Einspritzvorrichtung abgegeben.

Die symmetrische Verschiebung der Öffnungsflanke zu Beginn der Einspritzung und der Schließflanke am Ende der Einspritzung hat den Vorteil, daß der Einspritzmittelpunkt, das heißt die Mittellage M, nicht verschoben ist und damit eine symmetrische Vergrößerung oder Verkleinerung der Einspritzmenge erreicht wird. Auf diese Weise wird der Gleichlauf der verschiedenen Zylinder der Brennkraftmaschine zusätzlich verbessert. Figur 2 ist jedoch nicht erfindungsgemäss.

In einer bevorzugten Ausführungsform der Erfindung können sowohl die Geschwindigkeit der Nadel beim Öffnen oder Schließen, wie in Figur 1 dargestellt ist, und der Beginn und das Ende der Einspritzung symmetrisch verschoben werden, wie in Figur 2 dargestellt ist. Durch eine entsprechende Kombination der verschiedenen Maßnahmen wird eine optimale Anpassung der eingespritzten Kraftstoffmenge an die gewünschte Solleinspritzmenge erreicht.

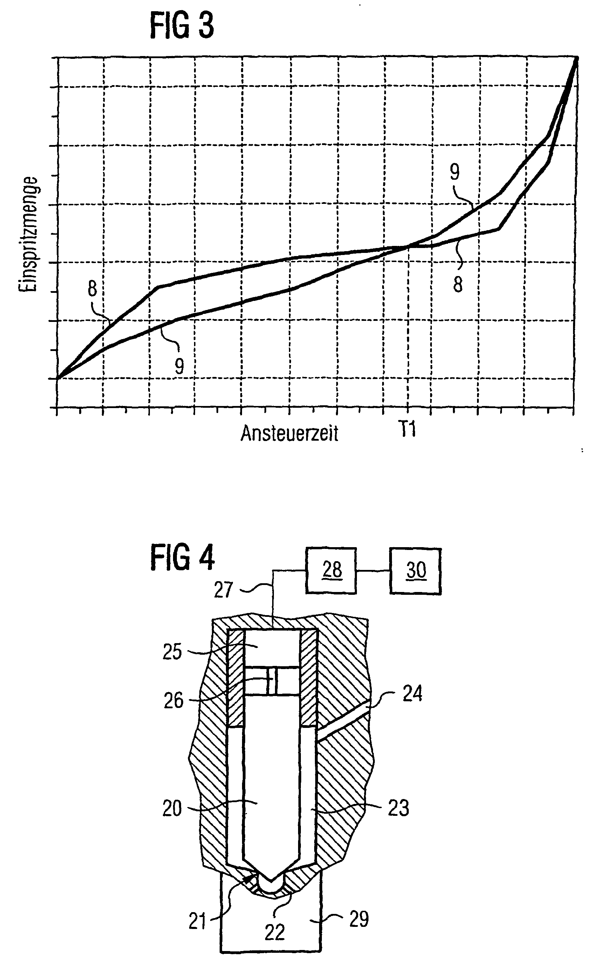

Figur 3 zeigt die Einspritzmenge von zwei Injektoren mit gleichen Öffnungs- und Schließflanken beim Nadelhub. Dabei ist zu erkennen, daß die Einspritzmenge des ersten Injektors 8 im Vergleich zum zweiten Injektor 9, der einen Norminjektor darstellt, deutlich variiert und bei kurzen Einspritzzeiten mehr Kraftstoff einspritzt als der zweite Injektor 9. Bei längeren Einspritzzeiten spritzt der erste Injektor 8 weniger Kraftstoff ein als der zweite Injektor 9. Der zweite Injektor 9 stellt einen Norminjektor dar, dessen Einspritzverhalten die vorgegebene Solleinspritzmenge abgibt. Der zweite Injektor 9 wird als Massstab zur Anpassung des Einspritzverhaltens des ersten Injektors 8 verwendet. Die Anpassung der Öffnungs- und/oder Schließflanken wird deshalb vorzugsweise in Abhängigkeit von der Einspritzzeit als Kennfeld abgelegt. Beispielsweise muß zum Ausgleich für den ersten Injektor 8 entsprechend Figur 3 bei einer Einspritzzeit, die kleiner als eine erste Einspritzzeit T1 ist, die Öffnungs- und/oder Schließflanken flacher ausgebildet werden und/oder die Öffnungs- und/oder Schließflanke in Richtung auf die Mittellage M verschoben werden.

Bei einer Einspritzzeit, die größer ist als die erste Einspritzzeit T1 ist, muß für den ersten Injektor eine steilere Öffnungs- und/oder Schließflanke und/oder eine Verschiebung der Öffnungs- und/oder Schließflanke weiter weg von der Mittellage verwendet werden, um zu erreichen, daß der erste und der zweite Injektor gleich viel Kraftstoff bei einer vorgegebenen Einspritzeit einspritzen.

Die Werte für die Steilheit und die Lage der Öffnungs- und/oder Schließflanke für den Nadelhub werden nach bekannten Verfahren, wie zum Beispiel in DE 197 00 711 C2 beschrieben, während des Betriebs der Brennkraftmaschine ermittelt und adaptiv korrigiert. Auf diese Weise wird auch eine Alterung der Einspritzvorrichtung ausgeglichen.

Die Werte für die Steuerparameter Steilheit der Öffnungs- und Schließflanken, Zeitpunkt des Beginns und des Endes der Öffnungs- und Schließflanken sind vorzugsweise in einem adaptiven Kennfeld abhängig von der Gaspedalstellung und/oder der Drehzahl der Brennkraftmaschine und/oder von der Ansteuerzeit der Einspritzvorrichtung abgelegt.

Fig. 4 zeigt schematisch den Aufbau einer Einspritzvorrichtung mit einer Einspritznadel 20, die in einer Einspritzkammer 23 axial beweglich angeordnet ist. Die Spitze der Einspritznadel ist einem Dichtsitz 21 zugeordnet, so daß in Schließposition die Einspritzkammer 23 von Einspritzlöchern 22 getrennt ist. Die Einspritzkammer 23 steht über einen Kanal 24 mit einem Kraftstoffspeicher in Verbindung. Es ist ein Aktor 25 vorgesehen, der durch ein Stellglied 26 mit der Einspritznadel 20 verbunden ist. Der Aktor 25 steht über eine Steuerleitung 27 mit einem Steuergerät 28 in Verbindung, das mit einem Datenspeicher 30 verbunden ist. Im Datenspeicher 30 sind Programme zur Ansteuerung des Aktors 25 und damit zur Steuerung der Position der Einspritznadel 20 abgelegt. Bei Ansteuerung des Aktors 25 wird die Einspritznadel 20 vom Dichtsitz 21 abgehoben und Kraftstoff wird über die Einspritzlöcher 22 in einen Zylinder 29 einer Brennkraftmaschine eingespritzt.

## Patentansprüche

1. Verfahren zur Zylindergleichstellung bezüglich der Kraftstoffeinspritzmenge für eine mehrere Zylinder aufweisende Brennkraftmaschine, bei der ein Steuerparameter zum Steuern der Einspritzung korrigiert wird, um einen systematischen Fehler an einer Einspritzvorrichtung auszugleichen, wobei als Steuerparameter eine Öffnungs- und/oder Schließflanke der Einspritznadel verwendet wird, **dadurch gekennzeichnet, daß** die Schließflanke steiler oder flacher ausgeführt wird.

2. Verfahren nach Anspruch 1, **dadurch gekennzeichnet, daß** die Öffnungsflanke steiler oder flacher ausgeführt wird.

3. Verfahren nach einem der Ansprüche 1 bis 2 **dadurch gekennzeichnet, daß** die Öffungs- und die Schließflanke die gleiche Steigung aufweisen.

4. Verfahren nach einem der Ansprüche 1 bis 3, **dadurch gekennzeichnet, daß** Werte für die Steilheit der Öffnungs-und/oder Schließflanke in einem adaptiven Kennfeld in Abhängigkeit von einer Gaspedalstellung und der Drehzahl abgelegt sind.

5. Verfahren nach einem der Ansprüche 1 bis 4, **dadurch gekennzeichnet, daß** der Beginn der Öffnungsflanke und das Ende der Schließflanke symmetrisch gegenüber einem vorgegebenen Beginn und vorgegebenen Ende der Einspritzung verschoben sind.

6. Verfahren nach einem der Ansprüche 1 bis 4, **dadurch gekennzeichnet, daß** die Öffnungsflanke und die Schließflanke symmetrisch gegenüber einer vorgegebenen Öffnungsflanke bzw. einer vorgegebenen Schließflanke verschoben sind.

7. Vefahren nach Anspruch 5, **dadurch gekennzeichnet, daß** der Beginn der Öffnungsflanke und das Ende der Schließflanke gegenüber einem vorgegebenen Beginn und Ende in Richtung auf die Mitte der Einspritzung verschoben sind.

8. Verfahren nach Anspruch 5, **dadurch gekennzeichnet, daß** der Beginn der Öffnungsflanke und das Ende der Schließflanke beim Ende der Einspritzung gegenüber dem normalen Beginn und dem normalen Ende von der Mitte der Einspritzung weggeschoben sind.

9. Verfahren nach einem der Ansprüche 1 bis 8, **dadurch gekennzeichnet, daß** die Steuerparameter abhängig von der Steuerzeit der Einspritzvorrichtung in einem Kennfeld abgelegt sind.

## Revendications

1. Procédé pour l'équilibrage des cylindres en ce qui concerne la quantité de carburant injectée pour un moteur à combustion interne possédant plusieurs cylindres, dans lequel un paramètre de commande destiné à la commande d'injection est corrigé pour compenser une erreur systématique du dispositif d'injection, dans lequel on utilise comme paramètre de commande un flanc d'ouverture et/ou de fermeture de l'aiguille d'injection, **caractérisé en ce que** le flanc de fermeture est réalisé plus raide ou plus plat.

2. Procédé selon la revendication 1, **caractérisé en ce que** le flanc d'ouverture est réalisé plus raide ou plus plat.

3. Procédé selon une des revendications 1 à 2, **caractérisé en ce que** le flanc d'ouverture et le flanc de fermeture présentent la même pente.

4. Procédé selon une des revendications 1 à 3, **caractérisé en ce que** les valeurs de la raideur du flanc d'ouverture et/ou du flanc de fermeture sont enregistrées dans un diagramme adaptatif en fonction d'une position de la pédale des gaz et de la vitesse de rotation.

5. Procédé selon une des revendications 1 à 4, **caractérisé en ce que** le début du flanc d'ouverture et la fin du flanc de fermeture sont décalés symétriquement par rapport à un début et à une fin prédéfinis de l'injection.

6. Procédé selon une des revendications 1 à 4, **caractérisé en ce que** le flanc d'ouverture et le flanc de fermeture sont décalés symétriquement par rapport à un flanc d'ouverture prédéfini et respectivement à un flanc de fermeture prédéfini.

7. Procédé selon la revendication 5, **caractérisé en ce que** le début du flanc d'ouverture et la fin du flanc de fermeture sont décalés vers le point milieu de l'injection par rapport à un début et une fin prédéfinis.

8. Procédé selon la revendication 5, **caractérisé en ce que** le début du flanc d'ouverture et la fin du flanc de fermeture à la fin de l'injection sont éloignés du point milieu de l'injection comparativement au début normal et à la fin normale.

9. Procédé selon une des revendications 1 à 8, **caractérisé en ce que** les paramètres de commande sont enregistrés dans un diagramme en fonction du temps de commande du dispositif d'injection.

## Claims

1. Method for co-ordinating cylinders with regard to the amount of fuel injected for a multi-cylinder internal combustion engine, in which a control parameter is corrected to control the injection to compensate for a systematic error at an injection device, with an opening and/or closing edge of the injection needle being used as the control parameter, **characterized in that** the closing edge is embodied more steeply or less steeply.

2. Method according to claim 1, **characterized in that** the opening edge is embodied more steeply or less steeply.

3. Method in accordance with one of the claims 1 to 2 **characterized in that** the opening and closing edge exhibit the same slope.

4. Method in accordance with one of the claims 1 to 3, **characterized in that** values for the steepness of the opening and/or closing edge are stored in an adaptive engine map depending on a gas pedal setting and the engine revolutions.

5. Method in accordance with one of the claims 1 to 4, **characterized in that** the beginning of the opening edge and the end of the closing edge are shifted symmetrically in relation to a predetermined beginning and predetermined end of the injection.

6. Method in accordance with one of the claims 1 to 4, **characterized in that** the opening edge and the closing edge are shifted symmetrically relative to a predetermined opening edge or a predetermined closing edge.

7. Method in accordance with claim 5, **characterized in that** the beginning of the opening edge and the end of the closing edge are shifted relative to a predetermined beginning and end in the direction of the middle of the injection.

8. Method according to claim 5, **characterized in that** the beginning of the opening edge are shifted away from the middle of the injection relative to the normal beginning and the normal end at the end of the injection.

9. Method in accordance with one of the claims 1 to 8, **characterized in that** the control parameters are stored in an engine map, depending on the control time of the injection device.
